# EUROPÄISCHE PATENTSCHRIFT

(11) **EP 3 639 354 B1**
(45) Veröffentlichungstag und Bekanntmachung des Hinweises auf die Patenterteilung: **15.06.2022**
(21) Anmeldenummer: 17755447.4
(22) Anmeldetag: 09.08.2017
(51) Int. Cl.: H02M 1/32

(54) **LEISTUNGSMODUL FÜR EINEN STROMRICHTER UND MULTILEVEL-STROMRICHTER**
POWER MODULE FOR A CONVERTER AND MULTILEVEL CONVERTER
MODULE DE PUISSANCE POUR UN CONVERTISSEUR DE COURANT ET CONVERTISSEUR DE COURANT À PLUSIEURS NIVEAUX

(43) Veröffentlichungstag der Anmeldung: 22.04.2020
(73) Patentinhaber: Siemens Energy Global GmbH & Co. KG, 81739 München (DE)
(72) Erfinder: ECKEL, Hans-Günter, 18059 Rostock (DE); SCHMITT, Daniel, 92353 Postbauer-Heng (DE); SCHREMMER, Frank, 90768 Fürth (DE); WAHLE, Marcus, 90587 Veitsbronn (DE)
(86) Internationale Anmeldenummer: PCT/EP2017/070157
(87) Internationale Veröffentlichungsnummer: WO 2019/029796

(56) Entgegenhaltungen:
- EP-A1- 2 747 267
- EP-A1- 2 940 845
- EP-A1- 3 068 008
- DE-A1- 1 613 735
- JP-A- S6 181 176
- JP-A- S61 157 257

## Beschreibung

Die Erfindung betrifft ein Leistungsmodul für einen Stromrichter und einen Multilevel-Stromrichter.

Unter einem so genannten Multilevel-Stromrichter wird ein Stromrichter verstanden, der Ausgangsspannungen erzeugt, die jeweils wenigstens drei Spannungswerte (für jede Phase des Stromrichters) annehmen können. Ein Vorteil eines Multilevel-Stromrichters gegenüber einem herkömmlichen Zweilevel-Stromrichter ist beispielsweise die Erzeugung oberschwingungsarmer Ausgangsspannungen. Modulare Multilevel-Stromrichter weisen mehrere in Reihe geschaltete Leistungsmodule auf, die auch als Submodule bezeichnet werden. Die Leistungsmodule modularer Multilevel-Stromrichter müssen für verschiedene Fehlerfälle ausgelegt werden. Wenn beispielsweise auf der Leistungsmodulebene ein Fehlerfall auftritt, aufgrund dessen ein Leistungsmodul nicht mehr funktionsfähig ist, muss das Leistungsmodul aus der Reihenschaltung herausgenommen werden können. Ferner kann es beispielsweise durch Kurzschlüsse zu Fehlern kommen, die den gesamten Stromrichter und somit alle Leistungsmodule betreffen.

Die europäische Patentanmeldung EP 2 940 845 A1 offenbart ein Leistungsmodul für einen modularen Multilevelkonverter, der einen Zwischenkreiskondensator und eine parallel zu dem Zwischenkreiskondensator geschaltete Halbbrücke mit zwei Halbleiterschaltern aufweist, wobei parallel zu einem Halbleiterschalter der Halbbrücke eine Bypassdiode und ein Thyristor geschaltet sind.

Aus der Offenlegungsschrift DE 16 13 735 A1 ist bekannt, einen Thyristor gegen Spannungsspitzen in Sperrrichtung durch Serienschalten einer Diode zu schützen.

Der Erfindung liegt die Aufgabe zugrunde, ein Leistungsmodul für einen Stromrichter, insbesondere für einen modularen Multilevel-Stromrichter, mit einer verbesserten Auslegung für Fehlerfälle anzugeben.

Die Aufgabe wird erfindungsgemäß durch die Merkmale des Anspruchs 1 gelöst.

Vorteilhafte Ausgestaltungen der Erfindung sind Gegenstand der abhängigen Ansprüche.

Ein erfindungsgemäßes Leistungsmodul für einen Stromrichter, insbesondere für einen Multilevel-Stromrichter, umfasst einen Zwischenkreiskondensator, zwei Anschlussklemmen, wenigstens eine parallel zu dem Zwischenkreiskondensator geschaltete Halbbrücke mit zwei Halbleiterschaltern, und für jede Halbbrücke eine parallel zu einem ersten Halbleiterschalter der Halbbrücke geschaltete Bypassdiode und eine parallel zu dem ersten Halbleiterschalter geschaltete Entlastungsschaltungsgruppe, die einen Entlastungsthyristor und eine zu dem Entlastungsthyristor in Reihe geschaltete Entlastungsdiode aufweist.

Die Parallelschaltung einer Entlastungsschaltungsgruppe zu einem Halbleiterschalter jeder Halbrücke ermöglicht vorteilhaft in einem Fehlerfall eine Überbrückung der jeweiligen Halbbrücke in einer ersten Stromrichtung. Die Entlastungsdiode kann dabei in einem Fehlerfall schnelle Spannungsänderungen abfangen, die der Entlastungsthyristor nicht aufnehmen kann. Die Bypassdiode kann vorteilhaft Fehlerströme in einer zweiten Stromrichtung abfangen, die von der Entlastungsschaltungsgruppe nicht abgefangen werden.

Die Erfindung sieht vor, dass das Leistungsmodul genau eine parallel zu dem Zwischenkreiskondensator geschaltete Halbbrücke aufweist, der erste Halbleiterschalter eingangsseitig und ausgangsseitig mit jeweils einer Anschlussklemme elektrisch direkt verbunden ist und die Entlastungsschaltungsgruppe einen parallel zu dem Entlastungsthyristor geschalteten Glättungskondensator aufweist.

Die Erfindung bezieht sich auf ein Leistungsmodul, das nur eine Halbbrücke mit zwei Halbleiterschaltern aufweist. Der parallel zu dem Entlastungsthyristor geschaltete Glättungskondensator wird im Normalbetrieb des Leistungsmoduls aufgeladen und entlädt sich durch den Sperrschichtstrom der Entlastungsdiode nur relativ langsam wieder, so dass schnelle Spannungsänderungen an der Entlastungsdiode stattfinden und der Entlastungsthyristor entlastet wird.

Eine weitere Ausgestaltung der Erfindung sieht vor, dass die Anode der Entlastungsdiode und die Kathode der Bypassdiode mit einem Mittelabgriff der Halbbrücke elektrisch direkt verbunden sind und die Kathode der Entlastungsdiode elektrisch direkt mit der Anode des Entlastungsthyristors verbunden ist. Ferner kann die Kathode der Entlastungsdiode über einen Verbindungswiderstand mit einer mit dem zweiten Halbleiterschalter verbundenen Elektrode des Zwischenkreiskondensators elektrisch verbunden sein.

Eine weitere Ausgestaltung der Erfindung sieht vor, dass jeder Halbleiterschalter einen Bipolartransistor mit isolierter Gate-Elektrode (IGBT = Insulated-Gate Bipolar Transistor) und eine dazu antiparallel geschaltete Freilaufdiode aufweist. IGBT eignen sich aufgrund ihrer hohen Spannungs- und Stromgrenzen vorteilhaft als Halbleiterschalter. Die Bypassdiode kann eine betriebliche Entlastung der dazu parallel geschalteten Freilaufdiode herbeiführen.

Weitere Ausgestaltungen der Erfindung sehen vor, dass die Entlastungsdiode eine Scheibenzellendiode ist, und/oder dass die Bypassdiode eine Scheibenzellendiode ist, und/oder dass der Entlastungsthyristor ein Scheibenzellenthyristor ist. Scheibenzellenbauelemente wie eine Scheibenzellendiode und ein Scheibenzellenthyristor ermöglichen vorteilhaft im Fehlerfall einen besonders sicheren Übergang in einen Kurzschluss mittels Durchlegieren, so dass das Leistungsmodul des Stromrichters im Fehlerfall sicher überbrückt wird.

Ein erfindungsgemäßer modularer Multilevel-Stromrichter weist mehrere erfindungsgemäße Leistungsmodule auf. Die Vorteile eines derartigen Multilevel-Stromrichters ergeben sich aus den oben genannten Vorteilen erfindungsgemäßer Leistungsmodule.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 einen Schaltplan eines Ausführungsbeispiels eines Stromrichters,
FIG 2 einen Schaltplan eines ersten Ausführungsbeispiels eines Leistungsmoduls für einen Stromrichter, und
FIG 3 einen Schaltplan eines zweiten Ausführungsbeispiels eines Leistungsmoduls für einen Stromrichter.

Einander entsprechende Teile sind in den Figuren mit denselben Bezugszeichen versehen.

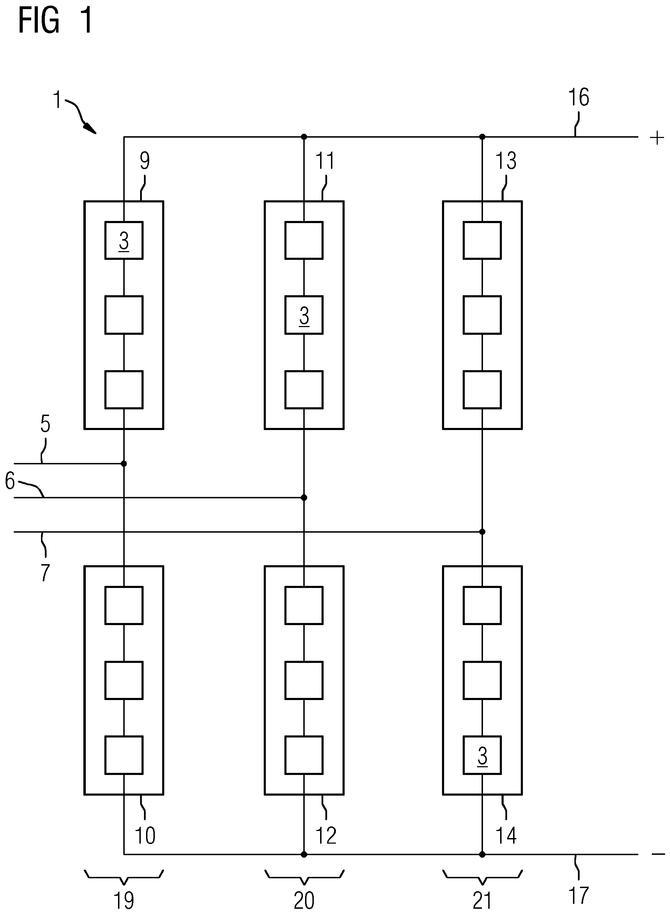

Figur 1 zeigt einen Schaltplan eines Ausführungsbeispiels eines Stromrichters 1. Der Stromrichter 1 ist als ein dreiphasiger modularer Multilevel-Stromrichter ausgebildet, der mehrere Leistungsmodule 3 aufweist. Der Stromrichter 1 weist einen ersten Wechselspannungsanschluss 5, einen zweiten Wechselspannungsanschluss 6 und einen dritten Wechselspannungsanschluss 7 auf.

Der erste Wechselspannungsanschluss 5 ist elektrisch mit einem ersten Phasenmodulzweig 9 und einem zweiten Phasenmodulzweig 10 verbunden. Der erste Phasenmodulzweig 9 und der zweite Phasenmodulzweig 10 bilden ein erstes Phasenmodul 19 des Stromrichters 1. Das von dem ersten Wechselspannungsanschluss 5 abgewandte Ende des ersten Phasenmodulzweigs 9 ist mit einem ersten Gleichspannungsanschluss 16 elektrisch verbunden. Das von dem ersten Wechselspannungsanschluss 5 abgewandte Ende des zweiten Phasenmodulzweigs 10 ist mit einem zweiten Gleichspannungsanschluss 17 elektrisch verbunden. Der erste Gleichspannungsanschluss 16 ist ein positiver Gleichspannungsanschluss. Der zweite Gleichspannungsanschluss 17 ist ein negativer Gleichspannungsanschluss.

Der zweite Wechselspannungsanschluss 6 ist mit einem Ende des dritten Phasenmodulzweigs 11 und mit einem Ende eines vierten Phasenmodulzweigs 12 elektrisch verbunden. Der dritte Phasenmodulzweig 11 und der vierte Phasenmodulzweig 12 bilden ein zweites Phasenmodul 20.

Der dritte Wechselspannungsanschluss 7 ist mit einem Ende eines fünften Phasenmodulzweigs 13 und mit einem Ende eines sechsten Phasenmodulzweigs 14 elektrisch verbunden. Der fünfte Phasenmodulzweig 13 und der sechste Phasenmodulzweig 14 bilden ein drittes Phasenmodul 21.

Das von dem zweiten Wechselspannungsanschluss 6 abgewandte Ende des dritten Phasenmodulzweigs 11 und das von dem dritten Wechselspannungsanschluss 7 abgewandte Ende des fünften Phasenmodulzweigs 13 sind mit dem ersten Gleichspannungsanschluss 16 elektrisch verbunden.

Das von dem zweiten Wechselspannungsanschluss 6 abgewandte Ende des vierten Phasenmodulzweigs 12 und das von dem dritten Wechselspannungsanschluss 7 abgewandte Ende des sechsten Phasenmodulzweigs 14 sind mit dem zweiten Gleichspannungsanschluss 17 elektrisch verbunden.

Jeder Phasenmodulzweig 9 bis 14 weist eine Mehrzahl von Leistungsmodulen 3 auf, welche elektrisch in Reihe geschaltet sind. Im Ausführungsbeispiel der Figur 1 weist jeder Phasenmodulzweig 9 bis 14 drei Leistungsmodule 3 auf. Andere Ausführungsbeispiele eines Stromrichters 1 können andere Anzahlen elektrisch in Reihe geschalteter Leistungsmodule 3 aufweisen; mindestens sind zwei Leistungsmodule 3 in Reihe geschaltet, es können aber auch beispielsweise 50 oder 100 Leistungsmodule 3 elektrisch in Reihe geschaltet sein.

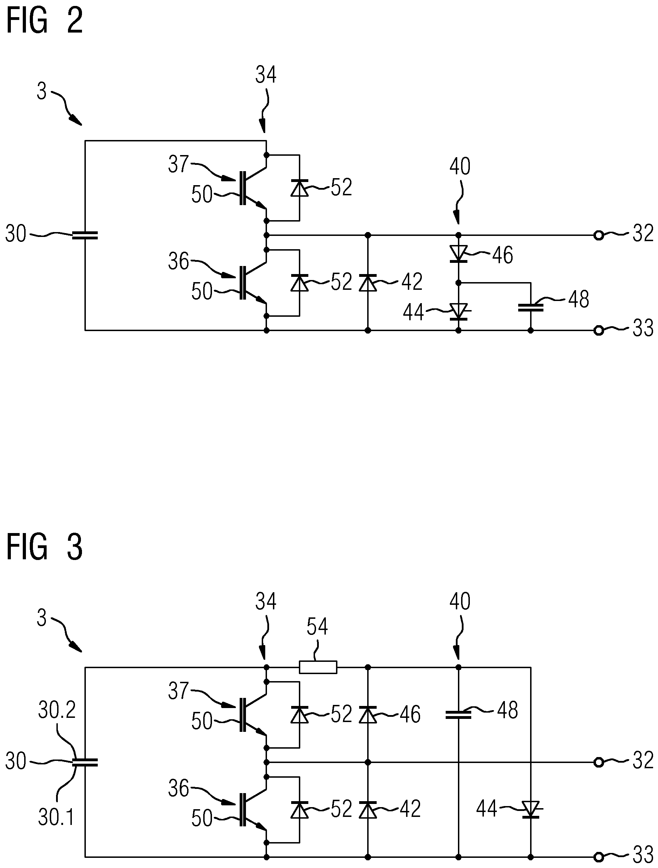

Figur 2 zeigt einen Schaltplan eines ersten Ausführungsbeispiels eines Leistungsmoduls 3 für einen Stromrichter 1. Das Leistungsmodul 3 umfasst einen Zwischenkreiskondensator 30, zwei Anschlussklemmen 32, 33, eine parallel zu dem Zwischenkreiskondensator 30 geschaltete Halbbrücke 34 mit einem ersten Halbleiterschalter 36 und einem zweiten Halbleiterschalter 37, eine parallel zu dem ersten Halbleiterschalter 36 geschaltete Entlastungsschaltungsgruppe 40 und eine parallel zu dem ersten Halbleiterschalter 36 und der Entlastungsschaltungsgruppe 40 geschaltete Bypassdiode 42. Der erste Halbleiterschalter 36 ist eingangsseitig und ausgangsseitig mit jeweils einer Anschlussklemme 32, 33 elektrisch direkt verbunden.

Die Entlastungsschaltungsgruppe 40 weist einen Entlastungsthyristor 44, eine zu dem Entlastungsthyristor 44 in Reihe geschaltete Entlastungsdiode 46 und einen parallel zu dem Entlastungsthyristor 44 geschalteten Glättungskondensator 48 auf.

Die Anode der Entlastungsdiode 46 und die Kathode der Bypassdiode 42 sind mit einem Mittelabgriff der Halbbrücke 34 und einer ersten Anschlussklemme 32 elektrisch direkt verbunden. Die Kathode der Entlastungsdiode 46 ist mit der Anode des Entlastungsthyristors 44 elektrisch direkt verbunden. Die Anode der Bypassdiode 42 und die Kathode des Entlastungsthyristors 44 sind elektrisch direkt mit der zweiten Anschlussklemme 33 verbunden.

Figur 3 zeigt einen Schaltplan eines zweiten Ausführungsbeispiels eines Leistungsmoduls 3 für einen Stromrichter 1. Das Leistungsmodul 3 umfasst einen Zwischenkreiskondensator 30, zwei Anschlussklemmen 32, 33, einen Verbindungswiderstand 54, eine parallel zu dem Zwischenkreiskondensator 30 geschaltete Halbbrücke 34 mit einem ersten Halbleiterschalter 36 und einem zweiten Halbleiterschalter 37, eine parallel zu dem ersten Halbleiterschalter 36 geschaltete Entlastungsschaltungsgruppe 40 und eine parallel zu dem ersten Halbleiterschalter 36 und der Entlastungsschaltungsgruppe 40 geschaltete Bypassdiode 42.

Der erste Halbleiterschalter 36 ist eingangsseitig und ausgangsseitig mit jeweils einer Anschlussklemme 32, 33 elektrisch direkt verbunden. Eine erste Elektrode 30.1 des Zwischenkreiskondensators 30 ist mit dem ersten Halbleiterschalter 36 elektrisch direkt verbunden. Eine zweite Elektrode 30.2 des Zwischenkreiskondensators 30 ist mit dem zweiten Halbleiterschalter 37 elektrisch direkt verbunden.

Die Entlastungsschaltungsgruppe 40 weist einen Entlastungsthyristor 44, eine zu dem Entlastungsthyristor 44 in Reihe geschaltete Entlastungsdiode 46 und einen parallel zu dem Entlastungsthyristor 44 geschalteten Glättungskondensator 48 auf.

Die Anode der Entlastungsdiode 46 und die Kathode der Bypassdiode 42 sind mit einem Mittelabgriff der Halbbrücke 34 und mit einer ersten Anschlussklemme 32 elektrisch direkt verbunden. Die Kathode der Entlastungsdiode 46 ist elektrisch direkt mit der Anode des Entlastungsthyristors 44 und über den Verbindungswiderstand 54 mit der zweiten Elektrode 30.2 des Zwischenkreiskondensators 30 elektrisch verbunden. Die Anode der Bypassdiode 42 und die Kathode des Entlastungsthyristors 44 sind elektrisch direkt mit der zweiten Anschlussklemme 33 und der ersten Elektrode 30.1 des Zwischenkreiskondensators 30 verbunden.

In den in den Figuren 2 und 3 gezeigten Ausführungsbeispielen weisen die Halbleiterschalter 36, 37 einen Bipolartransistor 50 mit isolierter Gate-Elektrode (IGBT) und eine dazu antiparallel geschaltete Freilaufdiode 52 auf, wobei jeder IGBT als ein n-Kanal-IGBT ausgeführt ist und der Kollektor des IGBT des ersten Halbleiterschalters 36 und der Emitter des IGBT des zweiten Halbleiterschalters 37 der Halbbrücke 34 jeweils dem Mittelabgriff der Halbbrücke 34 zugewandt sind. Alternativ können die Halbleiterschalter 36, 37 jedoch auch anders ausgebildet sein. Die Entlastungsdiode 46 und die Bypassdiode 42 können jeweils beispielsweise als eine Scheibenzellendiode ausgeführt sein. Der Entlastungsthyristor 44 kann beispielsweise als ein Scheibenzellenthyristor ausgeführt sein.

In beiden in den Figuren 2 und 3 gezeigten Ausführungsbeispielen dient die Entlastungsschaltungsgruppe 40 dazu, die Anschlussklemmen 32, 33 in einem Fehlerfall kurzzuschließen, um das Leistungsmodul 3 aus dem jeweiligen Strompfad des Stromrichters 1 herauszunehmen. In einem Fehlerfall fließt ein Strom von der ersten Anschlussklemme 32 über die Entlastungsdiode 46 und den Entlastungsthyristor 44 zu der zweiten Anschlussklemme 33 oder, bei umgekehrter Stromrichtung, von der zweiten Anschlussklemme 33 über die Bypassdiode 42 zu der ersten Anschlussklemme 32. Der Glättungskondensator 48 schützt den Entlastungsthyristor 44 vor schnellen Spannungsänderungen. Die Entlastungsdiode 46 fängt ferner in einem Fehlerfall schnelle Spannungsänderungen ab, die der Entlastungsthyristor 44 nicht aufnehmen kann. Im Normalbetrieb kann die Bypassdiode 42 die Freilaufdiode 52 des ersten Halbleiterschalters 36 unterstützen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Stromrichter
- 3: Leistungsmodul
- 5 bis 7: Wechselspannungsanschluss
- 9 bis 14: Phasenmodulzweig
- 16, 17: Gleichspannungsanschluss
- 19 bis 21: Phasenmodul
- 30: Zwischenkreiskondensator
- 30.1, 30.2: Elektrode
- 32, 33: Anschlussklemme
- 34: Halbbrücke
- 36, 37: Halbleiterschalter
- 40: Entlastungsschaltungsgruppe
- 42: Bypassdiode
- 44: Entlastungsthyristor
- 46: Entlastungsdiode
- 48: Glättungskondensator
- 50: IGBT
- 52: Freilaufdiode
- 54: Verbindungswiderstand
- 56: Entlastungskondensator

## Patentansprüche

1. Leistungsmodul (3) für einen Stromrichter (1), insbesondere für einen Multilevel-Stromrichter, das Leistungsmodul (3) umfassend
- einen Zwischenkreiskondensator (30),
- zwei Anschlussklemmen (32, 33),
- genau eine parallel zu dem Zwischenkreiskondensator (30) geschaltete Halbbrücke (34) mit zwei Halbleiterschaltern (36, 37), und
- für die Halbbrücke (34) eine parallel zu einem ersten Halbleiterschalter (36) der Halbbrücke (34) geschaltete Bypassdiode (42) und eine parallel zu dem ersten Halbleiterschalter (36) geschaltete Entlastungsschaltungsgruppe (40), die einen Entlastungsthyristor (44) aufweist, wobei der erste Halbleiterschalter (36) eingangsseitig und ausgangsseitig mit jeweils einer Anschlussklemme (32, 33) elektrisch direkt verbunden ist,
**dadurch gekennzeichnet, dass**
die Entlastungsschaltungsgruppe (40) eine zu dem Entlastungsthyristor (44) in Reihe geschaltete Entlastungsdiode (46) aufweist, und
die Entlastungsschaltungsgruppe (40) einen parallel zu dem Entlastungsthyristor (44) geschalteten Glättungskondensator (48) aufweist.

2. Leistungsmodul (3) nach Anspruch 1,
**dadurch gekennzeichnet, dass**
die Bypassdiode (42) eine Scheibenzellendiode ist.

3. Leistungsmodul (3) nach einem der vorhergehenden Ansprüche,
**dadurch gekennzeichnet, dass**
die Anode der Entlastungsdiode (46) und die Kathode der Bypassdiode (42) mit einem Mittelabgriff der Halbbrücke (34) elektrisch direkt verbunden sind und die Kathode der Entlastungsdiode (46) elektrisch direkt mit der Anode des Entlastungsthyristors (44) verbunden ist.

4. Leistungsmodul (3) nach einem der vorhergehenden Ansprüche,
**dadurch gekennzeichnet, dass**
die Kathode der Entlastungsdiode (46) über einen Verbindungswiderstand (54) mit einer mit dem zweiten Halbleiterschalter (37) verbundenen Elektrode (30.2) des Zwischenkreiskondensators (30) elektrisch verbunden ist.

5. Leistungsmodul (3) nach einem der vorhergehenden Ansprüche,
**dadurch gekennzeichnet, dass**
jeder Halbleiterschalter (36, 37) einen Bipolartransistor (50) mit isolierter Gate-Elektrode und eine dazu antiparallel geschaltete Freilaufdiode (52) aufweist.

6. Leistungsmodul (3) nach einem der vorhergehenden Ansprüche,
**dadurch gekennzeichnet, dass**
die Entlastungsdiode (46) eine Scheibenzellendiode ist.

7. Leistungsmodul (3) nach einem der vorhergehenden Ansprüche,
**dadurch gekennzeichnet, dass**
der Entlastungsthyristor (44) ein Scheibenzellenthyristor ist.

8. Modularer Multilevel-Stromrichter (1) mit mehreren jeweils gemäß einem der vorhergehenden Ansprüche ausgebildeten Leistungsmodulen (3).

## Claims

1. Power module (3) for a converter (1), in particular for a multi-level converter, the power module (3) comprising
- an intermediate circuit capacitor (30),
- two connection terminals (32, 33),
- exactly one half-bridge (34) connected in parallel with the intermediate circuit capacitor (30) and having two semiconductor switches (36, 37) and,
- for the half-bridge (34), a bypass diode (42) connected in parallel with a first semiconductor switch (36) of the half-bridge (34) and a load-relief circuit unit (40) connected in parallel with the first semiconductor switch (36), which load-relief circuit unit comprises a load-relief thyristor (44), wherein the first semiconductor switch (36), on the input side and the output side, is directly electrically connected to one connection terminal (32, 33) respectively,
**characterized in that**
the load-relief circuit unit (40) comprises a load-relief diode (46) connected in series with the load-relief thyristor (44), and
the load-relief circuit unit (40) comprises a smoothing capacitor (48) connected in parallel with the load-relief thyristor (44).

2. Power module (3) according to Claim 1,
**characterized in that**
the bypass diode (42) is a disk-type diode.

3. Power module (3) according to one of the preceding claims,
**characterized in that**
the anode of the load-relief diode (46) and the cathode of the bypass diode (42) are directly electrically connected to a center tap of the half-bridge (34), and the cathode of the load-relief diode (46) is directly electrically connected to the anode of the load-relief thyristor (44).

4. Power module (3) according to one of the preceding claims,
**characterized in that**
the cathode of the load-relief diode (46) is electrically connected, via a connecting resistor (54), to one of the electrodes (30.2) of the intermediate circuit capacitor (30), which electrode is connected to the second semiconductor switch (37).

5. Power module (3) according to one of the preceding claims,
**characterized in that**
each semiconductor switch (36, 37) comprises a bipolar transistor (50) having an insulated gate electrode and a freewheeling diode (52) which is connected in an antiparallel arrangement thereto.

6. Power module (3) according to one of the preceding claims,
**characterized in that**
the load-relief diode (46) is a disk-type diode.

7. Power module (3) according to one of the preceding claims,
**characterized in that**
the load-relief thyristor (44) is a disk-type thyristor.

8. Modular multi-level converter (1) having a plurality of power modules (3) which are respectively configured according to one of the preceding claims.

## Revendications

1. Module (3) de puissance d'un convertisseur (1), notamment d'un convertisseur à plusieurs niveaux, le module (3) de puissance comprenant
- un condensateur (30) de circuit intermédiaire,
- deux bornes (32, 33) de connexion,
- exactement un demi-pont (34) monté en parallèle au condensateur (30) de circuit intermédiaire et ayant deux interrupteurs (36, 37) à semiconducteur et,
- pour le demi-pont (34), une diode (42) de dérivation, montée en parallèle à un premier interrupteur (36) à semiconducteur du demi-pont (34), et un groupe (40) de circuit de décharge, qui est monté en parallèle au premier interrupteur (36) à semiconducteur et qui a un thyristor (44) de décharge, dans lequel le premier interrupteur (36) à semiconducteur est connecté électriquement, directement du côté de l'entrée et du côté de la sortie, à respectivement une borne (32, 33) de connexion,
**caractérisé en ce que**
le groupe (40) de circuit de décharge a une diode (46) de décharge montée en série avec le thyristor (44) de décharge, et
le groupe (40) de circuit de décharge a un condensateur (48) de lissage monté en parallèle au thyristor (44) de décharge.

2. Module (3) de puissance suivant la revendication 1,
**caractérisé en ce que**
la diode (42) de dérivation est une diode à disque.

3. Module (3) de puissance suivant l'une des revendications précédentes,
**caractérisé en ce que**
l'anode de la diode (46) de décharge et la cathode de la diode (42) de dérivation sont reliées électriquement directement à une prise médiane du demi-pont (34) et la cathode de la diode (46) de décharge est reliée électriquement directement à l'anode du thyristor (44) de décharge.

4. Module (3) de puissance suivant l'une des revendications précédentes,
**caractérisé en ce que**
la cathode de la diode (46) de décharge est reliée électriquement par une résistance (54) de liaison à une électrode (30.2), reliée au deuxième interrupteur (37) à semiconducteur, du condensateur (30) de circuit intermédiaire.

5. Module (3) de puissance suivant l'une des revendications précédentes,
**caractérisé en ce que**
chaque interrupteur (36, 37) à semiconducteur a un transistor (50) bipolaire à électrode de grille isolée et une diode (52) de roue libre, qui en est montée tête bêche.

6. Module (3) de puissance suivant l'une des revendications précédentes,
**caractérisé en ce que**
la diode (46) de décharge est une diode à disque.

7. Module (3) de puissance suivant l'une des revendications précédentes,
**caractérisé en ce que**
le thyristor (44) de décharge est un thyristor à disque.

8. Convertisseur (1) de courant modulaire à plusieurs niveaux, ayant plusieurs modules (3) de puissance constitués suivant l'une des revendications précédentes.
